# EUROPÄISCHE PATENTSCHRIFT

(11) **EP 1 668 891 B1**
(45) Veröffentlichungstag und Bekanntmachung des Hinweises auf die Patenterteilung: **11.01.2017**
(21) Anmeldenummer: 04762477.0
(22) Anmeldetag: 22.07.2004
(51) Int. Cl.: H04N 5/225

(54) **BILDAUFNAHMESYSTEM**
IMAGE RECORDING SYSTEM
SYSTEME D'ACQUISITION D'IMAGES

(30) Priorität: 06.08.2003 DE 10335906
(43) Veröffentlichungstag der Anmeldung: 14.06.2006
(73) Patentinhaber: ROBERT BOSCH GMBH, 70442 Stuttgart (DE)
(72) Erfinder: GOTTWALD, Frank, 71287 Weissach (DE); SCHICK, Jens, 71083 Herrenberg (DE)
(86) Internationale Anmeldenummer: PCT/DE2004/001627
(87) Internationale Veröffentlichungsnummer: WO 2005/015897

(56) Entgegenhaltungen:
- EP-A- 0 860 990
- US-A- 4 734 778
- US-A- 4 803 557
- PATENT ABSTRACTS OF JAPAN Bd. 016, Nr. 280 (E-1221), 23. Juni 1992 (1992-06-23) -& JP 04 068995 A (SHARP CORP), 4. März 1992 (1992-03-04)

## Beschreibung

### Stand der Technik

Die Erfindung betrifft ein Bildaufnahmesystem und ein Verfahren zur Herstellung eines Bildaufnahmesystems.

Aus DE 199 17 438 A1 sind eine Schaltungsanordnung und ein Verfahren zur Herstellung einer Schaltungsanordnung bekannt, wobei die Schaltungsanordnung eine Leiterplatte und einen auf dieser angeordneten Bildaufnehmer umfasst. Ferner wird ein Objektivhalter zur Aufnahme und Befestigung von optischen Elementen vorgeschlagen. Hinweise auf ein Bildaufnahmesystem mit einem einfachen Aufbau bei gleichzeitig hoher Genauigkeit des Bildaufnahmesystems fehlen in der DE 199 17 438 A1.

Aus der US 4734778 ist ein Kameramodul bekannt, bei welchem mittels Stellschrauben eine scheibenförmige Basis, auf welcher ein Bildsensor befestigt ist, ausgerichtet wird.

Aus der JP04068995 ist ein Verfahren bekannt, mittels welchem eine optische Achse ausgerichtet wird. Die Ausrichtung geschieht hierbei mittels eines Referenzmusters.

Aus der EP0860990 A2 ist ein Kameramodul bekannt, bei welchem ein Sensorträger mit Hilfe von Federelementen an ein Kameragehäuse gepresst wird.

Aus der US 4803557 ist ein Kameraaufbau bekannt, bei welchem ein Sensorträger mittels eines rohrförmigen Elements entlang einer optischen Achse verschoben werden kann.

### Vorteile der Erfindung

Das Bildaufnahmesystem, gemäß Anspruch 1 bestehend aus wenigstens einem Bildsensor, wenigstens einer Optikeinheit, wenigstens einem Gehäuse und Befestigungsmitteln zur Fixierung des Bildsensors relativ zum Gehäuse, wobei das Gehäuse Mittel zur Aufnahme der Optikeinheit aufweist, wobei das Gehäuse innenseitig Ausrichtungsmittel aufweist, die eine Ausrichtung, der Hauptachse des Bildsensors und der Hauptachse der Optikeinheit zueinander ermöglichen, hat den Vorteil, dass hierbei ein einfacher Aufbau bei gleichzeitig hoher Genauigkeit des Bildaufnahmesystems erreicht wird.

Vorteilhaft ist, dass das Mittel zur Aufnahme der Optikeinheit des Gehäuses eine Gewindeaufnahme ist. Eine Gewindeaufnahme bietet viele Vorteile. Zum einen ist die Montage der Optikeinheit durch Eindrehen derselben in das Gehäuse einfach und positionsgenau möglich. Ferner bietet die Gewindeaufnahme die Möglichkeit, in einfacher Weise die Bildschärfe des Bildsensors durch Ein- oder Ausdrehen der Optikeinheit einzustellen.

Vorteilhaft ist die Verwendung einer Spannfeder als Befestigungsmittel zur Fixierung des Bildsensors relativ zum Gehäuse, da Spannfedern als lösbare Verbindung eine einfache Montage ermöglichen.

Weitere Vorteile ergeben sich aus der nachfolgenden Beschreibung von Ausführungsbeispielen mit Bezug auf die Figuren und aus den abhängigen Patentansprüchen.

### Zeichnungen

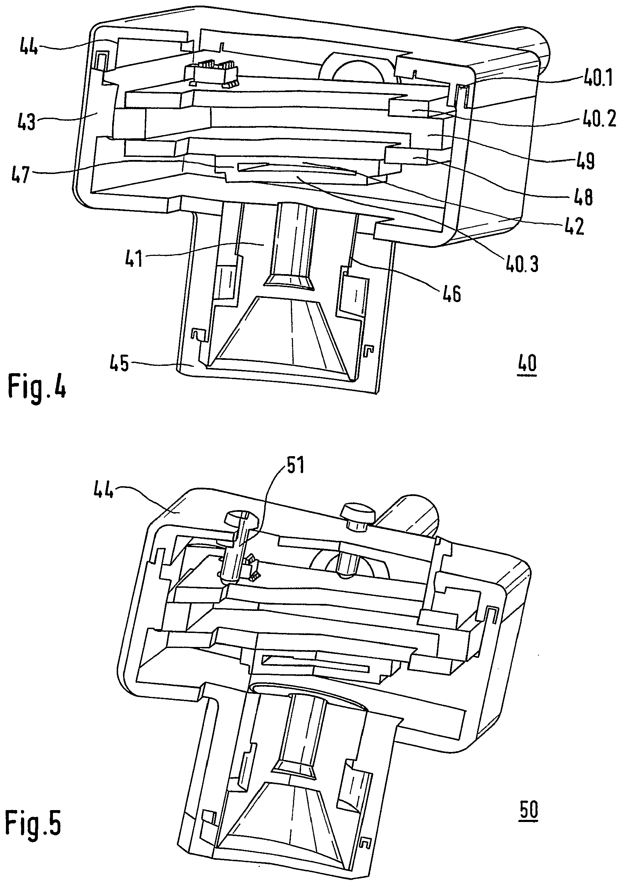

Die Erfindung wird nachstehend anhand der in Figuren 4 und 5 dargestellten Ausführungsformen näher erläutert. Es zeigen:
Figur 1 ein Bildaufnahmesystem
Figur 2 eine Variante des Bildaufnahmesystems
Figur 3 ein Ablaufdiagramm eines Verfahrens
Figur 4 ein Bildaufnahmesystem in einer Schnittdarstellung,
Figur 5 eine Variante des Bildaufnahmesystems in einer Schnittdarstellung.

### Beschreibung von Ausführungsbeispielen

Nachfolgend werden ein Bildaufnahmesystem, insbesondere zur Verwendung in einem Kraftfahrzeug, und ein Verfahren zur Herstellung eines Bildaufnahmesystems beschrieben.

Das Bildaufnahmesystem umfasst einen Bildsensor, eine Optikeinheit, ein Gehäuse und Befestigungsmittel zur Fixierung des Bildsensors relativ zum Gehäuse, wobei das Gehäuse innenseitig Ausrichtungsmittel aufweist, die eine Ausrichtung, insbesondere eine befestigungslose, axiale Ausrichtung, der Hauptachse des Bildsensors und der Hauptachse der Optikeinheit zueinander ermöglichen.

Bildaufnahmesysteme, die für den automobilen Einsatz vorgesehen sind, müssen einerseits sehr robust, zugleich aber auch sehr genau sein. Gleichzeitig ist ein weiteres Kriterium, dass die Bildaufnahmesysteme preiswert sind. Hohe Genauigkeiten der Bildaufnahmesysteme können beispielsweise durch zusätzlichen Aufwand in der Konstruktion erreicht werden, wobei Stifte Anschlagkanten mit hochgenauen Maßhaltigkeiten die wesentlichen Lösungsmöglichkeiten darstellen. Die beschriebenen Lösungsmöglichkeiten sind im Allgemeinen mit erhöhten Kosten verbunden. Diese Kosten sind für den Vorgang der Montage notwendig, nicht aber für den Gebrauch des Bildaufnahmesystems.

Grundsätzlich ermöglichen auch rückgekoppelte Systeme die geforderten Genauigkeiten zu erreichen. Beispielsweise ist es denkbar, externe Sensoren, beispielsweise Lagebezugssensoren, in die Fertigungslinie bei der Herstellung des Bildaufnahmesystems einzubauen, welche die Bildaufnahmesysteme bei der Fertigung vermessen und bei Abweichungen regelnd eingreifen. Beispielsweise ist denkbar, dass diese externen Sensoren Merkmale auf dem zu fertigenden Objekt beobachten, die bei der Konstruktion in einem maßhaltigen Zusammenhang mit der genutzten Genauigkeit stehen, indem beispielsweise ein aufgedruckter Kreis beobachtet wird, der maßhaltig zu einem später genutzten Sensor, insbesondere einem Bildsensor, steht. Es wird hierbei also nicht das Nutzsignal ausgewertet, sondern ein Merkmal über einen externen Sensor, der seinerseits in einer nicht genau bekannten Maßhaltigkeit zu dem eigentlichen Nutzsensor gefertigt ist.

Nachfolgend wird ein Bildaufnahmesystem und ein Verfahren zur Herstellung eines Bildaufnahmesystems beschrieben, die es ermöglichen, dass die Rückkopplung mit dem eigentlichen Bildsensor durchgeführt wird, wobei keine zusätzlichen Merkmale auf dem Objekt, also dem Bildsensor, zur Fertigung notwendig sind. Damit entspricht die Fertigungsgenauigkeit nahezu exakt der Nutzgenauigkeit des Bildsensors. Voraussetzung hierfür ist, dass das Bildaufnahmesystem mit dem Bildsensor in diesem Fertigungsschritt zumindest teilweise funktionsfähig ist. Das Bildaufnahmesystem ist dazu derart ausgelegt, dass eine Verschiebung der Leiterplatte mit dem Bildsensor und eine anschließende Befestigung in dem verschobenen Zustand möglich ist.

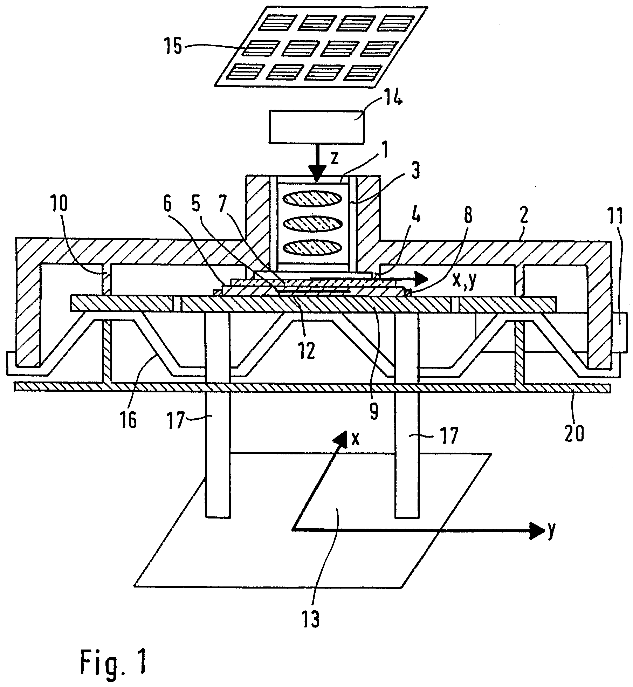

Figur 1 zeigt ein Bildaufnahmesystem bestehend aus einem Gehäuse 2, einer Optikeinheit 1, einem Bildsensor 12 (Imagerchip), Abstandshalter 4, sowie einer Spannfeder 16. Das Bildaufnahmesystem besteht aus einer Optikeinheit 1 und einem Imager 5, der maßgenau zu dieser Optikeinheit 1 positioniert ist. Im bevorzugten Ausführungsbeispiel ist die Optikeinheit 1 als Zylinder ausgelegt, der unmittelbar in das Gehäuse 2 in ein Zylinderloch 3 mit Gewinde geschraubt wird. Auf der Innenseite des Gehäuses 2 um das Zylinderloch 3 mit der Optikeinheit 1 herum sind im bevorzugten Ausführungsbeispiel drei Abstandshalter 4 angebracht. Drei Abstandhalter 4 sind eine Mindestzahl, um eine Ebene festzulegen. Die derart festgelegte Ebene ist annähernd senkrecht zu der Achse des Zylinderloches 3 und damit senkrecht zu der Hauptachse der Optikeinheit 1, die sich im Zylinderloch 3 befindet. Diese Ebene ermöglicht die axiale Ausrichtung der Hauptachse des Bildsensors 12 und der Hauptachse der Optikeinheit 1 zueinander. Die Hauptachse des Bildsensors 12 ist die Lotrechte auf die lichtempfindliche Ebene des Bildsensors 12 durch den Bildmittelpunkt. Die Maßhaltigkeit zwischen der Ebene, definiert durch die Abstandhalter 4, und der Achse des Zylinderloches 3 ist beispielsweise durch computergestützte Fertigungsverfahren, beispielsweise durch Materialbearbeitung auf CNC-Fräsmaschinen, erreichbar. Die Achse des Zylinderloches 3 entspricht innerhalb gegebener Toleranzen der späteren optischen Achse des Bildaufnahmesystems, wobei die Richtung der optischen Achse des Bildaufnahmesystems durch zwei Punkte, dem Objektivhauptpunkt und dem Mittelpunkt des Bildsensors 12, festgelegt ist. An den durch die Abstandhalter 4 festgelegten Ebenen wird der Bildsensor 12 (Imagerchip) angelegt. Der Bildsensor 12 enthält den Imager 5, also den lichtempfindlichen Teil des Bildsensors 12, in dem Gehäuse 6 des Bildsensors 12, sowie eine lichtdurchlässige Schutzabdeckung 7, die planparallel zum Imager 5 angebracht ist. Die Maßhaltigkeit von Imager 5 zu der Schutzabdeckung 7 erfolgt in der Chipherstellung mit hoher Güte. Dagegen spielt die Maßhaltigkeit der elektrischen Anschlüsse 8 auf der Unterseite des Bildsensors 12 und die Lage des Bildsensors 12 auf der Leiterblatte 9 keine Rolle für die notwendige Genauigkeit. In einem im Verhältnis zu den Abmessungen des Bildsensors 12 größerem Abstand zum Zylinderloch 3 sind weitere Abstandshalter 10 angebracht, wobei diese Abstandhalter 10 gegenüber den Abstandshaltern 4 im Bereich des Zylinderloches 3 mit einer geringeren Genauigkeit hergestellt bzw. angebracht sind. Auf der Leiterplatte 9 befindet sich die funktionsfähige Elektronik und eine Buchse 11 zur Übertragung von Daten, beispielsweise Bilddaten, und Energie, so dass die Leiterplatte 9 mit dem Bildsensor 12 angesteuert werden kann. Zur Montage des Bildsensors 12 wird mit einem x-y-Verfahrtisch 13 mit Leiterplattenaufnahmen 17 der Bildsensor 12 mit der Schutzabdeckung 7 auf der Leiterplatte 9 an die mittleren Abstandhalter 4 gedrückt. Ein Verstellmotor 14 dreht die Optikeinheit 1 in das Zylinderloch 3 bis die Elektronik über die Buchse 11 ein scharfes Bild abgibt. Der x-y-Verfahrtisch 13 wird alternativ manuell durch Bedienpersonal und/oder automatisch angesteuert, bis Merkmale auf dem Testmuster 15, die sich vor der Optikeinheit 1 an definierter Stelle befinden, auf die gewünschte Position innerhalb des vom Bildsensor 12 erzeugten Bildes in Form von Bilddaten rücken. Der Vorgang des Scharfstellens und der x-y-Ausrichtung wird in einer alternativen Variante iterativ solange wiederholt, bis die gewünschte Genauigkeit erreicht ist. Während bzw. unmittelbar nach dem beschriebenen Einstellvorgang werden in einer Variante des bevorzugten Ausführungsbeispiels weitere Einstellparameter der Bildqualität des Bildsensors 12 bestimmt. Dies sind insbesondere wenigstens ein Einstellparameter zur intrinsischen Kalibrierung und/oder wenigstens ein Einstellparameter der Fixed Pattern Noise Korrektur. Nach der gewünschten Positionierung wird die Leiterplatte 9 über eine Spannfeder 16 an das Gehäuse 2 angedrückt, so dass der Bildsensorchip sich nicht mehr relativ zum Zylinderloch 3 bewegen kann. Alternativ oder zusätzlich sind Klebemittel und/oder wenigstens ein Schraubverbindungsmittel zur Fixierung des Bildsensors 12 relativ zum Gehäuse 2 möglich. Zum Schluss wird der rückseitige Deckel 20 beispielsweise durch Schrauben angebracht. Dieser rückseitige Deckel 20 hat die Funktion, die Leiterplatte 9 zu klemmen und/oder durch Masseanschluss die Elektromagnetische Verträglichkeit (EMV)-Dichtigkeit zu erreichen und/oder einen thermischen Übergang zwischen Bildsensor 12 und Umgebung zur Kühlung desselben zu erreichen.

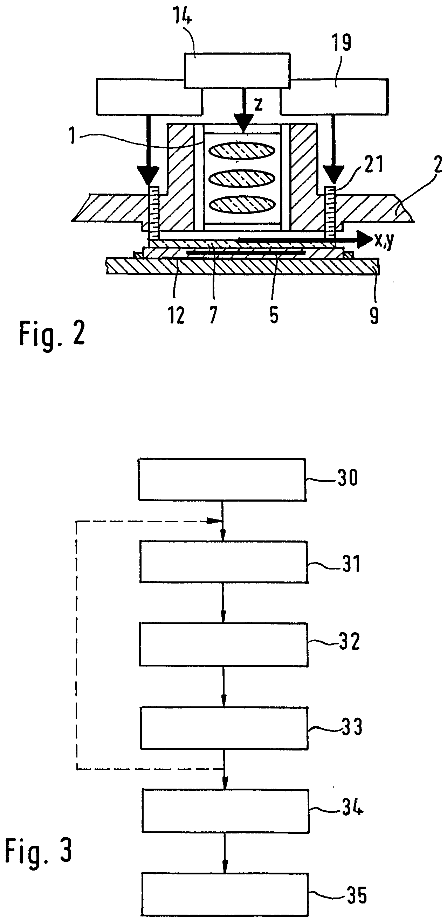

Figur 2 zeigt eine Variante des Bildaufnahmesystems wobei nur der zentrale Teil der Figur 1 mit dem Bildsensor 12 und der Optikeinheit 1 dargestellt ist. Komponenten, die bereits in der Figur 1 aufgeführt sind, werden nachfolgend nicht mehr erläutert. Die hohe Maßhaltigkeit von Imager 5 zu der Schutzabdeckung 7 auf dem Bildsensor 12 erhöhen die Kosten für die Herstellung des Bildsensors 12. In der hier beschriebenen Variante werden deshalb über einen geeigneten Verstellmechanismus die Taumelwinkelfehler, also die Verdrehung des Bildsensors 12 um die x-Achse und/oder die y-Achse, zwischen Imager 5 und Schutzabdeckung 7 ausgeglichen. Hierzu werden wenigstens zwei der mindestens drei verwendeten Abstandshalter in dieser Variante des bevorzugten Ausführungsbeispiels durch Schrauben 21 ersetzt. Bei dem Scharfstellen über den Verstellmotor 14 werden gleichzeitig unter Vermessung von über dem Bild verteilten Merkmalen mindestens zwei weitere Schraubenstellmotoren 19 angesteuert, wobei der Imager 5 im Bildsensor 12 fluchtend zur Optikeinheit 1 eingestellt wird. Figur 3 zeigt ein Ablaufdiagramm des Verfahrens zur Herstellung eines Bildaufnahmesystems bei Einbeziehung der beschriebenen Varianten. Im ersten Verfahrensschritt 30 wird der Bildsensor mit der Schutzabdeckung auf der Leiterplatte an die im Bereich des Zylinderloches befindlichen Abstandhalter, die in der hier beschriebenen Variante als Schrauben ausgeführt sind, angedrückt. Im zweiten Verfahrenschritt 31 wird die Optikeinheit mittels eines Verstellmotors in das Zylinderloch eingedreht, bis eine nachgeschaltete Auswerteeinheit ein Signal abgibt, dass ein, scharfes Bild vorliegt. Der anschließende Verfahrensschritt 32 dient zur radialen Ausrichtung der Hauptachse des Bildsensors und der Hauptachse der Optikeinheit zueinander, indem über einen x-y-Verfahrtisch der Bildsensor an die gewünschte x-y-Position gebracht wird. Im daran folgenden Verfahrensschritt 33 wird die axiale Ausrichtung der Hauptachse des Bildsensors und der Hauptachse der Optikeinheit zueinander durch Verstellung der Schrauben durchgeführt. Optional werden die Verfahrensschritte 31, 32, 33 iterativ solange wiederholt, bis die gewünschte Genauigkeit der Ausrichtung erreicht ist. Im anschließenden Verfahrensschritt 34 wird in Abhängigkeit der Bilddaten von dem Testmuster wenigstens ein weiterer Einstellparameter des Bildsensors, beispielsweise wenigstens ein Einstellparameter zur intrinsischen Kalibrierung und/oder wenigstens ein Einstellparameter der Fixed Pattern Noise Korrektur, ermittelt und gegebenenfalls eingestellt. Der letzte Verfahrenschritt 36 dient der Fixierung des Bildsensors mittels Befestigungsmitteln relativ zum Gehäuse.

Anhand von Figur 4 und Figur 5 werden im Folgenden Ausführungsbeispiele der Erfindung erläutert.

Das in Figur 4 dargestellte Bildaufnahmesystem 40 umfasst ein Gehäuse 40.1, 44 das aus einem im Wesentlichen topfförmigen Gehäusekörper 40.1 und aus einem den Gehäusekörper 40.1 verschließenden Deckel 44 besteht. Mit dem Gehäusekörper 40.1 ist ein optisches Modul 41 verbunden. In dem Gehäusekörper 40.1 ist ein mit dem optischen Modul 41 in Wirkverbindung stehender Bildsensor 47 mit einem Imagerchip 42 angeordnet. Wirkverbindung bedeutet in diesem Zusammenhang, dass das optische Modul 41 ein dem Aufnahmebereich des optischen Moduls 41 entsprechendes Bild auf den Bildsensor 47 , bzw. genauer gesagt, auf den Imagerchip 42 des Bildsensors 47 abbildet. Der Bildsensor 47 mit dem aus lichtempfindlichem Silizium bestehenden Imagerchip 42 ist vorzugsweise mit einer ersten Leiterplatte 48 verklebt und/oder verlötet. Die den Bildsensor 47 tragende Leiterplatte 48 ist auf einer ersten Oberfläche eines Zwischenträgers 49 angeordnet. Der Zwischenträger 49 trägt auf seiner zweiten Oberfläche eine zweite Leiterplatte 40.2. Auf dieser zweiten Leiterplatte sind in der Figur nicht näher dargestellte elektronische Komponenten, Stecker und dergleichen angeordnet, die schaltungstechnisch mit dem auf der ersten Leiterplatte 48 angeordneten Bildsensor 47 in elektrischer Verbindung stehen. Wenigstens Teilbereiche des Außenumfangs des Zwischenträgers 49 haben die Gestalt einer Kugelmantelfläche. Die solchermaßen ausgestalteten Bereiche des Außenumfangs des Zwischenträgers 49 greifen formschlüssig in entsprechend formangepasste Bereiche 43 der Innenwandung des Gehäusekörpers 40.1 ein, die also ebenfalls Teile einer Kugelfläche darstellen. Der Zwischenträger 49 ist somit praktisch in einer Art Kugelgelenk gelagert. In einer ersten Ausführungsvariante sind wenigstens zwei den Durchmesser des Zwischenträgers 49 begrenzende Teilbereiche des Außenumfangs des Zwischenträgers derart kugelflächenförmig ausgestaltet und greifen in wenigstens zwei formangepasste Bereiche 43 der Innenwandung des Gehäusekörpers 40.1 ein. In einer weiteren Ausführungsvariante sind drei derartiger Bereiche vorgesehen, die zweckmäßig rotationssymmetrisch angeordnet und daher winkelmäßig um etwa 120° voneinander beabstandet sind. In einer weiteren Ausführungsvariante können vier Teilbereiche vorgesehen sein, die winkelmäßig um 90° voneinander beabstandet sind. In einer weiteren Ausführungsvariante, die eine besonders sichere Lagerung des Zwischenträgers ermöglicht, ist der vollständige Außenumfang des Zwischenträgers 49 kreisförmig und als Teil einer Kugelmantelfläche ausgebildet, der in einer formangepassten Ringstruktur in dem Inneren des Gehäusekörpers 40.1 gelagert ist. Bei allen vorstehend beschriebenen Ausführungsvarianten ist der Zwischenträger 49 durch die einem Kugellager ähnliche Lagerung in dem Gehäusekörper 40.1 leicht dreh- und kippbar angeordnet. Auf diese Weise kann, durch Drehen und/oder Kippen des Zwischenträgers 49 der Imagerchip 42 sehr leicht und dennoch mit hoher Präzision auf das optische Modul 41 justiert werden. Nach Einstellung der optimalen Justierlage kann der Zwischenträger 49, beispielsweise mittels eines schnell aushärtenden Klebstoffs, in seinem Kugellager dauerhaft fixiert werden, um die Justierlage zu sichern.

In der in Figur 5 dargestellten Ausführungsvariante eines Bildaufnahmesystems 50 sind drei Stellschrauben 51 vorgesehen, die in dem Gehäuseboden 44 drehbar gelagert sind. Vorzugsweise sind diese Stellschrauben 51 symmetrisch in Bezug auf die optische Achse des Bildaufnahmesystems 50 angeordnet und beispielsweise winkelmäßig gesehen gleichmäßig beabstandet auf einem Kreis derart angeordnet, dass sie einen Winkelabstand von 120° haben. Die Spitzen der Stellschrauben 51 greifen entweder unmittelbar auf der Außenoberfläche der ihnen zugewandten Leiterplatte 40.2 an. Oder, in einer Ausführungsvariante, durch Ausnehmungen in der Leiterplatte 40.2 hindurch direkt auf der ihnen zugewandten Außenoberfläche des Zwischenträgers 49. Diese Stellschrauben 51 bilden somit eine Drei-Punkt-Auflageverstellung für die feinfühlige Verstellung des Zwischenträgers 49 in eine bestimmte Kipplage. Ist durch Verdrehen der Stellschrauben 51 eine einer optimalen Justierung entsprechende Kipplage des Zwischenträgers 49 erreicht, werden die drei Stellschrauben 51 zweckmäßig mit einem Klebstoff in ihrer Lage gesichert.

Ein Bildaufnalnnesystem gemäß Figur 4 wird zweckmäßig wie folgt hergestellt. Das mit einer strahlungsdurchlässigen Abdeckkappe 45 frontal verschlossene optische Modul 41 wird, unter Zuhilfenahme eines Verbindungsmittels 46, insbesondere eines Klebstoffs, mit dem Gehäusekörper 40.1 des Gehäuses verbunden. Die mit den Komponenten, wie Bildsensor, elektronische Bauelemente, Stecker und dergleichen bestückten Leiterplatten 40.2, 48 werden mit dem Zwischenträger 49 verbunden, insbesondere verschraubt. Auf die kugelmantelflächenförmig ausgebildeten Bereiche 43 des Gehäusekörpers 40.1 wird ein vorzugsweise durch UV-Strahlung aushärtbarer Klebstoff aufgebracht. Mit dem Bildsensor 47 in Richtung auf das optische Modul 41 ausgerichtet wird anschließend der Zwischenträger in den Gehäusekörper 40.1 eingebracht und dort in dem von den Bereichen 43 gebildeten "Kugellager" gelagert. Durch Drehen und Kippen des Zwischenträgers 49 innerhalb des Kugellagers wird der Bildsensor 47 in Bezug auf das optische Modul 41 justiert. Nach Erreichen einer optimalen Justierlage wird der Klebstoff durch Bestrahlung mit UV-Licht ausgehärtet. Dadurch wird der Zwischenträger 49 dauerhaft fixiert. Abschließend wird der Deckel 44 mit dem Gehäusekörper 40.1 verklebt.

Das Herstellungsverfahren eines Bildaufnahmesystems gemäß Figur 5 unterscheidet sich von dem zuvor beschriebenen Verfahren noch dadurch, dass die Kipplage des Zwischenträgers 49 mittels der Stellschrauben 51 feinfühlig eingestellt wird.

Die beschriebenen Bildaufnahmesysteme und das Verfahren zur Herstellung eines Bildaufnahmesystems sind für CCD - Bildsensoren und/oder CMOS-Bildsensoren geeignet.

## Patentansprüche

1. Bildaufnahmesystem, bestehend aus wenigstens einem Bildsensor (12), wenigstens einer Optikeinheit (1), wenigstens einem Gehäuse (6) und Befestigungsmitteln zur Fixierung des Bildsensors (12) relativ zum Gehäuse (6), wobei das Gehäuse (6) Mittel zur Aufnahme der Optikeinheit (1) aufweist, wobei das Gehäuse (6) innenseitig Ausrichtungsmittel aufweist, die eine Ausrichtung der Hauptachse des Bildsensors (12) und der Hauptachse der Optikeinheit (1) zueinander ermöglichen, **dadurch gekennzeichnet, dass** der Bildsensor (12) auf einem in einem Kugellager gelagerten Zwischenträger (49) angeordnet ist, wobei das Kugellager von jeweils kugelmantelflächenförmig ausgestalteten Randbereichen des Zwischenträgers und kugelmantelflächenförmig ausgestalteten Bereichen des Gehäusekörpers (40.1) gebildet wird, die in dem Inneren des Gehäusekörpers (40.1) formschlüssig ineinander greifen.

2. Bildaufnahmesystem nach Anspruch 1, **dadurch gekennzeichnet, dass** die Mittel zur Aufnahme der Optikeinheit (1) des Gehäuses (6) eine Gewindeaufnahme ist.

3. Bildaufnahmesystem nach einem der vorhergehenden Ansprüche, **dadurch gekennzeichnet, dass** die Befestigungsmittel zur Fixierung des Bildsensors (12) relativ zum Gehäuse (6) Klebemittel und/oder wenigstens ein Schraubverbindungsmittel und/oder wenigstens ein Spannverbindungsmittel ist.

4. Bildaufnahmesystem nach einem der vorhergehenden Ansprüche, **dadurch gekennzeichnet, dass** das Bildaufnahmesystem (50) Stellschrauben (51) umfasst, die sich einerseits an dem Gehäuse (40.1, 44) und andererseits unmittelbar oder mittelbar an dem Zwischenträger (49) abstützen.

## Claims

1. Image recording system, comprising at least one image sensor (12), at least one optical unit (1), at least one housing (6) and fixing means for fixing the image sensor (12) relative to the housing (6), the housing (6) having means for holding the optical unit (1), the housing (6) having alignment means on the inside, which permit alignment of the main axis of the image sensor (12) and the main axis of the optical unit (1) relative to each other, **characterized in that** the image sensor (12) is arranged on an intermediate support (49) mounted in a spherical bearing, wherein the spherical bearing is formed by edge regions of the intermediate support that are respectively configured in the form of spherical outer surfaces and regions of the housing body (40.1) that are configured in the form of spherical outer surfaces and which engage in one another with a form fit in the interior of the housing body (40.1).

2. Image recording system according to Claim 1, **characterized in that** the means for holding the optical unit (1) of the housing (6) is a threaded holder.

3. Image recording system according to one of the preceding claims, **characterized in that** the fixing means for fixing the image sensor (12) relative to the housing (6) is adhesive means and/or at least one screw connecting means and/or at least one clamping connecting means.

4. Image recording system according to one of the preceding claims, **characterized in that** the image recording system (50) comprises set screws (51) which are supported on one side on the housing (40.1, 44) and on the other side directly or indirectly on the intermediate support (49).

## Revendications

1. Système d'acquisition d'images constitué d'au moins un capteur d'images (12), d'au moins une unité optique (1), d'au moins un boîtier (6) et de moyens de fixation destinés à fixer le capteur d'images (12) par rapport au boîtier (6), dans lequel le boîtier (6) comporte des moyens destinés recevoir l'unité optique (1), dans lequel le boîtier (6) comporte à l'intérieur de celui-ci des moyens d'orientation qui permettent d'orienter l'axe principal du capteur d'image (12) et l'axe principal de l'unité optique (1) l'un par rapport à l'autre, **caractérisé en ce que** le capteur d'images (12) est disposé sur un support intermédiaire (49) monté dans un roulement à billes, dans lequel le roulement à billes est formé par des régions de bord respectivement réalisées de manière à présenter la forme d'une enveloppe sphérique du support intermédiaire et de régions réalisées de manière à présenter la forme d'une enveloppe sphérique du corps de boîtier (40.1), qui s'engagent les unes dans les autres par complémentarité de forme à l'intérieur du corps de boîtier (40.1).

2. Système d'acquisition d'images selon la revendication 1, **caractérisé en ce que** le moyen destiné à recevoir l'unité optique (1) du boîtier (6) est un réceptacle fileté.

3. Système d'acquisition d'images selon l'une quelconque des revendications précédentes, **caractérisé en ce que** le moyen de fixation destiné à fixer le capteur d'images (12) par rapport au boîtier (6) est un adhésif et/ou au moins un moyen de liaison par vis et/ou au moins un moyen de liaison par serrage.

4. Système d'acquisition d'images selon l'une quelconque des revendications précédentes, **caractérisé en ce que** le système d'acquisition d'images (50) comprend des vis de réglage (51) qui prennent appui d'une part sur le boîtier (40.1, 44) et d'autre part directement ou indirectement sur le support intermédiaire (49).
